Europäisches Patentamt

(19) European Patent Office

Office européen des brevets

(11) Numéro de publication: **0 019 540
B1**

## (12) FASCICULE DE BREVET EUROPEEN

(45) Date de publication du fascicule du brevet:
08.12.82

(51) Int. Cl.³: **G 01 F 23/24**, F 01 M 11/12

(21) Numéro de dépôt: 80400656.7

(22) Date de dépôt: **12.05.80**

(54) **Dispositif de mesure d'un niveau de liquide.**

(30) Priorité: **21.05.79 FR 7912908**

(43) Date de publication de la demande:
**26.11.80 Bulletin 80/24**

(45) Mention de la délivrance du brevet:
**08.12.82 Bulletin 82/49**

(84) Etats contractants désignés:
**DE GB IT**

(56) Documents cités:
**FR-A-2 367 276**

(73) Titulaire: **e.d. VEGLIA, 125, rue de Montreuil,
F-75540 Paris Cedex 11 (FR)**

(72) Inventeur: **Gomez, Michel, 10 avenue de Palissy,
F-94340 Joinville-Le-Pont (FR)**

(74) Mandataire: **Bloch, Robert et al, Cabinet ROBERT
BLOCH 39 avenue de Friedland, F-75008 Paris (FR)**

## Dispositif de mesure d'un niveau de liquide

L'invention concerne un dispositif pour mesurer le niveau d'un liquide dans un réservoir, utilisant une résistance à fort coefficient de température immergée dans le liquide. L'invention concerne en particulier un dispositif pour mesurer le niveau d'huile dans le carter-moteur d'un véhicule automobile.

Il est connu par le brevet FR-A 2 367 276, pour la détection d'un niveau de liquide, de disposer une sonde à fort coefficient de température dans le réservoir et de lui appliquer un courant constant. Si le niveau est bas, la sonde est dans l'air et sa température augmente, donc aussi sa résistance. Si au contraire la sonde est plongée dans le liquide, sa température augmente très peu. La tension aux bornes de la sonde est par conséquent représentative du niveau de liquide, et au moyen d'un circuit de détection approprié relié à la sonde, on peut obtenir une tension proportionnelle au niveau du liquide.

Actuellement, cette tension est utilisée pour une détection en tout ou rien. Lorsque le niveau de liquide descend audelà d'une valeur déterminée, une alerte se déclenche, par exemple par allumage d'une lampe de signalisation.

Mais il apparaît souhaitable de permettre en permanence l'affichage du niveau sur le cadran d'un galvanomètre et l'invention vise à répondre à ce besoin.

L'invention a pour objet un dispositif de mesure d'un niveau de liquide, du type comprenant une sonde à fort coefficient de température plongée dans le liquide dont le niveau est à mesurer et un circuit de détection relié à la sonde pour délivrer une tension représentative du niveau de liquide, un circuit mémoire du type analogique auquel est appliquée ladite tension, un circuit de génération de signaux et un comparateur analogique auquel sont appliqués, d'une part, le signal de sortie du circuit mémoire et, d'autre part, le signal issu du circuit de génération de signaux, et dont la sortie est reliée à des moyens d'affichage analogiques, caractérisé par le fait que lesdits signaux issus dudit circuit de génération sont des signaux en dent de scie et que lesdits moyens d'affichage analogiques sont constitués par un galvanomètre d'affichage.

Le signal de sortie du comparateur est un signal en créneaux dont la largeur est fonction du niveau de liquide. Le galvanomètre réalise mécaniquement une intégration de ces signaux en créneaux et fournit sur son cadran le niveau de liquide.

De préférence, le circuit mémoire comprend un second comparateur ayant une entrée à la masse et recevant ladite tension sur l'autre entrée, un condensateur relié à la sortie du comparateur et un amplificateur monté entre la sortie du second comparateur et l'entrée du comparateur cité en premier.

L'invention sera bien comprise à la lecture de la description ci-après, faite en référence aux dessins annexés dans lesquels:

— la fig. 1 est un schéma d'un circuit de détection associé à un circuit d'alerte;
— la fig. 2 représente un circuit permettant l'affichage analogique du niveau détecté au moyen du circuit de la fig. 1.

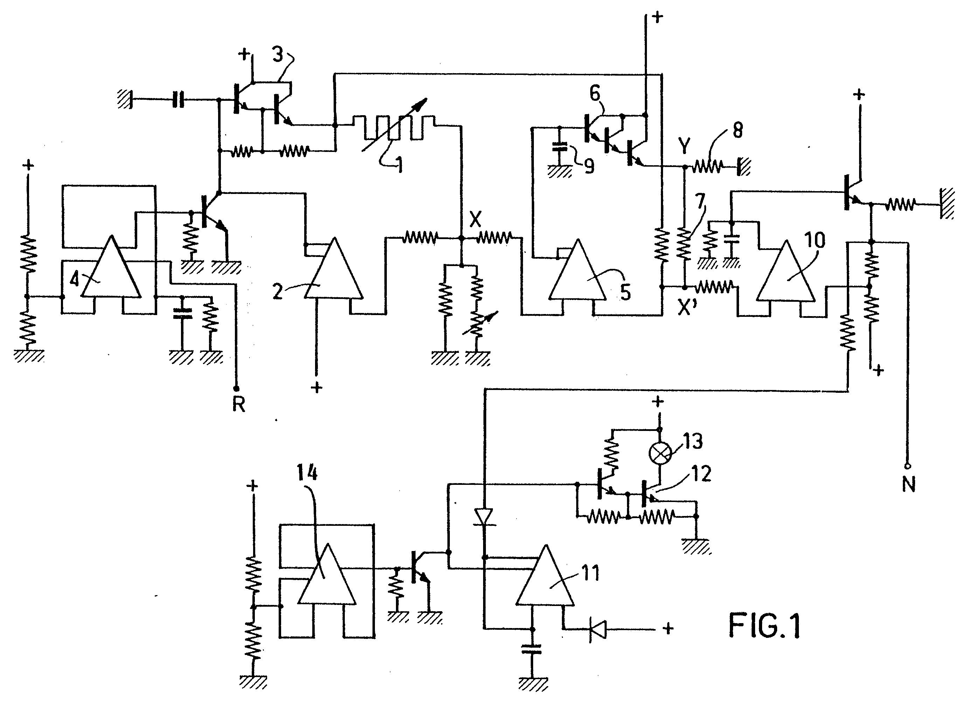

Le circuit de la figure 1 comprend une résistance 1 à fort coefficient de température, ou sonde, qui est plongée dans un liquide dont on veut détecter le niveau.

La sonde 1 est alimentée en courant constant par un comparateur 2 monté en générateur de courant, par l'intermédiaire d'un circuit Darlington 3. Un comparateur 4 monté en oscillateur astable commande le fonctionnement du Darlington de façon que la sonde 1 soit alimentée en courant de façon cyclique, par exemple pendant une durée de 2 secondes toutes les 20 secondes.

Un comparateur 5 a une entrée reliée au point X relié à une borne de la sonde 1, et l'autre entrée reliée au point X' qui est relié à l'autre borne de la sonde 1. De plus, la sortie du comparateur 5 est reliée à un Darlington 6 dont la sortie Y est reliée, par l'intermédiaire d'une résistance 7, au point X' et d'une résistance 8 à la masse et un condensateur 9 est également relié à la sortie du comparateur 5.

Le comparateur 5 permet de supprimer l'influence de la température initiale du liquide et de la température ambiante sur la mesure. En effet, le condensateur 9 relié à la sortie du comparateur 5 se charge en fonction de la tension stabilisée $U_x$ au point X, qui dépend de la température ambiante T puisque la résistance de la sonde dépend de T.

Le passage du courant dans la sonde 1 provoque l'échauffement de celle-ci, d'une manière variable suivant le degré d'immersion de la sonde dans le liquide. La tension $U_s$ aux bornes de la sonde 1 augmente et la tension $(U_x - U_s)$ obtenue à la sortie du comparateur 5 devient inférieure à la tension qui a chargé le condensateur 9. Aucun courant ne peut alors passer du condensateur 9 vers le comparateur 5.

L'information de niveau de liquide est donnée par la tension en X' qui, grâce à la compensation opérée par le comparateur 5, est indépendante de la température ambiante T.

Cette tension $U_{x'}$ est appliquée à un comparateur 10 monté en amplificateur et présentant un gain important.

La sortie de l'amplificateur 10 est reliée à un circuit d'alerte qui comprend un comparateur 11 monté en bistable, donc ayant une sortie bouclée sur son entrée. L'autre sortie du comparateur 11 attaque la base d'un Darlington 12 à la sortie duquel est montée une lampe de signalisation 13. L'autre entrée du comparateur 11 reçoit une tension de référence qui fixe le degré d'immersion de la sonde pour lequel l'alerte se déclenche par allumage de la lampe 13.

Il est également prévu un comparateur 14 monté en astable et fonctionnant à une fréquence de l'ordre de 1 à 2 Hz pour inhiber la base du Darlington 12. On obtient ainsi un clignotement de la lampe 13 qui renforce l'effet d'alerte pour l'usager.

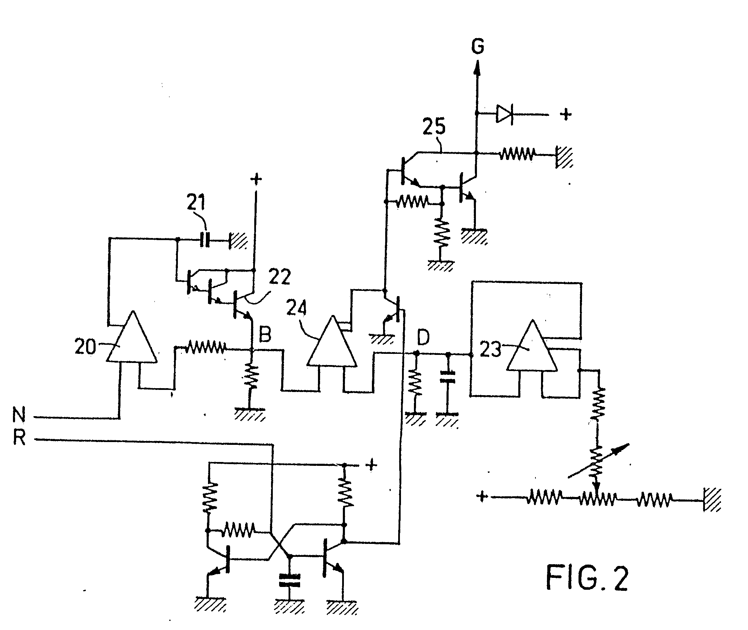

Le circuit d'alerte décrit ci-dessus fonctionne en tout ou rien, et ne permet pas de connaître en permanence le niveau de liquide. Le circuit de la figure 2 répond à ce besoin en permettant l'affichage de la tension recueillie à la borne N sur un galvanomètre.

Le circuit d'affichage de la figure 2 comprend un comparateur 20 dont l'entrée est reliée à la borne N et dont la sortie est reliée à un condensateur 21 servant de mémoire. On obtient donc à la sortie B du Darlington 22 une tension représentative du niveau de liquide.

Un comparateur 23 est associé à un circuit RC de manière à délivrer au point D une tension en dents de scie.

Un comparateur 24 a une entrée reliée au point B et l'autre entrée reliée au point D, et délivre par conséquent un signal en créneaux dont la largeur est fonction de la tension au point B, c'est-à-dire du niveau de liquide.

Ce signal en créneaux est appliqué à la base d'un Darlington 25 dont la sortie G commande un galvanomètre. On obtient ainsi en permanence l'affichage du niveau de liquide, car le galvanomètre réalise une intégration mécanique des signaux qui lui sont appliqués.

De plus, la borne R reliée à la sortie du comparateur 4 monté en astable constitue l'une des entrées du circuit d'affichage, de manière à inhiber la base du Darlington 25 et donc à permettre un »rafraîchissement« du condensateur 21 toutes les 20 secondes, de la même façon que pour le condensateur 9 du circuit de détection. Cette mesure autorise l'emploi de composants de qualité moyenne. En effet, on élimine ainsi l'influence des résistances de fuite sur les résultats de mesure.

L'invention est notamment applicable à la détection du niveau d'huile dans le carter-moteur d'un véhicule automobile, la lampe de signalisation 13 et le cadran du galvanomètre étant disposés sur le tableau de bord du véhicule.

## Revendications

1. Dispositif de mesure d'un niveau de liquide, du type comprenant une sonde (1) à fort coefficient de température plongée dans le liquide dont le niveau est à mesurer et un circuit de détection (2—10) relié à la sonde pour délivrer une tension représentative du niveau de liquide, un circuit mémoire du type analogique (20—22) auquel est appliquée ladite tension, un circuit (23) de génération de signaux et un comparateur analogique (24) auquel sont appliqués, d'une part, le signal de sortie du circuit mémoire et, d'autre part, le signal issu du circuit de génération de signaux, et dont la sortie (G) est reliée à des moyens d'affichage analogiques, caractérisé par le fait que lesdits signaux issus dudit circuit de génération sont des signaux en dent de scie et que lesdits moyens d'affichage analogiques sont constitués par un galvanomètre d'affichage.

2. Dispositif selon la revendication 1, dans lequel le circuit mémoire comprend un second comparateur (20) ayant une entrée à la masse et recevant ladite tension sur l'autre entrée, un condensateur (21) relié à la sortie du comparateur et un amplificateur (22) monté entre la sortie du second comparateur et l'entrée du comparateur cité en premier.

3. Dispositif selon la revendication 2, comprenant des moyens pour rafraîchir le condensateur (21) de manière cyclique.

## Patentansprüche

1. Flüssigkeitsstandanzeiger mit einer in die Flüssigkeit, deren Standhöhe zu messen ist, eintauchbaren, einen hohen Temperaturkoeffizienten aufweisenden Sonde (1), einer an die Sonde angeschlossenen Gleichrichtschaltung (2—10) zur Abgabe einer für die Standhöhe repräsentativen Spannung, einer Analog-Speicherschaltung (20—22), an die diese Spannung angelegt wird, einer Signalerzeugungsschaltung (23) und einem Analogvergleicher (24), dem einerseits das Ausgangssignal der Analog-Speicherschaltung und andererseits das von der Signalerzeugungsschaltung stammende Signal zugeführt werden und dessen Ausgang (G) an eine Analog-Anzeigeeinrichtung angeschlossen ist, dadurch gekennzeichnet, daß die von der Signalerzeugungsschaltung stammenden Signale sägezahnförmige Signale sind, und daß die Analog-Anzeigeeinrichtung durch ein Anzeigegalvanometer gebildet ist.

2. Flüssigkeitsstandanzeiger nach Anspruch 1, dadurch gekennzeichnet, daß die Analog-Speicherschaltung einen zweiten Vergleicher (20), der einen an Masse angeschlossenen Eingang und einen die Spannung empfangenden Eingang hat, einen an den Ausgang des Vergleichers angeschlossenen Kondensator (21) und einen Verstärker (22) enthält, der zwischen dem Ausgang des zweiten Vergleichers und dem Eingang des zuerst genannten Vergleichers liegt.

3. Flüssigkeitsstandanzeiger nach Anspruch 2, dadurch gekennzeichnet, daß er Mittel zum zyklischen Laden des Kondensators (21) umfaßt.

## Claims

1. A device for measuring the level of a liquid, of the type comprising a high temperature coefficient sensor immersed in the liquid, the level of which is to be measured and a detection circuit connected to the sensor for delivering a voltage indicative of the level of the liquid, a memory circuit of the analog type to which said voltage ist applied, a signal generator circuit and an analog comparator to which are applied, on the one hand, the output signal of the memory circuit and, on the other hand, the signal from the signal generator circuit and the output of which is connected to analog display means, characterized in that said signals issuing from said generator circuit are sawtooth signals and said analog display means are constituted by a display galvanometer.

2. A device as claimed in Claim 1, wherein the memory circuit comprises a second comparator having one input connected to earth and receiving said voltage on the other input, a capacitor connected to the output of the comparator and an amplifier mounted between the output of the second comparator and the input of the first-mentioned comparator.

3. A device as claimed in Claim 2, comprising means for cyclically refreshing the capacitor.

FIG.1

0 019 540

FIG. 2